# EUROPÄISCHE PATENTSCHRIFT

(11) **EP 2 227 946 B1**
(45) Veröffentlichungstag und Bekanntmachung des Hinweises auf die Patenterteilung: **16.11.2011**
(21) Anmeldenummer: 09004857.0
(22) Anmeldetag: 02.04.2009
(51) Int. Cl.: A01K 3/00, E04H 12/22

(54) **Pfahl für Einfriedungen, insbesondere Weidezaunpfahl, und ein Verfahren zu seiner Herstellung**
Post for enclosures, in particular meadow fence post and a method for its manufacture
Poteau pour enclos, notamment poteau de barrière de prairie, et son procédé de fabrication

(30) Priorität: 12.03.2009 DE 202009003393 U
(43) Veröffentlichungstag der Anmeldung: 15.09.2010
(73) Patentinhaber: Schabehorn, Petra, 49326 Melle (DE)
(72) Erfinder: Schabehorn, Petra, 49326 Melle (DE)

(56) Entgegenhaltungen:
- WO-A-01/53636
- DE-U1- 8 708 746
- DE-U1- 8 905 991
- FR-A- 2 550 409
- GB-A- 1 201 282
- US-A- 5 123 623
- US-A1- 2002 035 959
- US-A1- 2002 162 994
- US-A1- 2004 119 058

## Beschreibung

Die Erfindung bezieht sich auf einen Pfahl zur Herstellung von Einfriedungen mittels Bändern, Litzen, Seilten, Drähten und dergleichen, insbesondere einen Weidezaunpfahl, im wesentlichen bestehend aus einem Stützfuß mit Erdspießen und einer darüberliegenden Trittfläche sowie einem oberen Pfahlkörper, der entweder untrennbar mit dem Fuß verbunden ist oder vom Stützfuß trennbar ist.

Derartige pfahlartige Konstruktionen mit Erdspießen (US 5,123,623) sind bereits bekannt, insbesondere als versetzbare Einfriedungspfosten bei Weidezäunen (DE 87 08 746 U1, FR 2550409 A), die mittels elektrisch leitender Bänder (US 2002/0162994), Litzen, Seile oder Drähten (US 2004/0119058 A1) Hochspannungsimpulse führen und so leicht versetzbare und gefahrlose Hütevorrichtungen für Tiere ermöglichen (WO 01/53636 A1). Ein Anwendungsbeispiel und deren Zweckmäßigkeiten wird z. B. in der DE-PS 4007259 und den dazu herangezogenen Druckschriften hinlänglich beschrieben.

Diese als Stand der Technik anzusehende Lösung hat jedoch erhebliche Mängel in Bezug auf Trittsicherheit, gute Kraftübertragung, seitliche Stabilität und Bruchfestigkeit. Des weiteren ist die herstellungsbedingte feste Höhe ein in der Praxis oft bemängelter Nachteil.

Die Aufgabe der vorliegenden Erfindung besteht nun darin, einen Pfahl zu schatten, der die oben genannten Mängel weitestgehend behebt.

Die Verwendung von 3 oder mehr Erdspießen, vorzugsweise aus Metall in der gezeichneten Form bewirkt zwingend, daß die Trittkraft beim Eintreten in den Boden immer verlustarm einwirkt. Eine seitliche Krafteinwirkung auf die Erdspieße wird verhindert, und so ist es erfindungsgemäß unmöglich, daß die Eintrittskraft einseitig auf den Stützfuß einwirkt.

Auch eine naturgemäß nach vorne gerichtete Trittkraft wird immer auf alle Erdspieße gleichzeitig und gleichmäßig übertragen. Dieser erfindungsgemäße Vorteil wird auch gewährleistet wenn die größte Druckkraft vom seitlichen Rand des hinteren Schuhteils ausgehen sollte.

Des weiteren wird durch die erfindungsgemäße Mehrpunktabstützung erreicht, daß darauf befestigte Haltekonstruktionen, Stangen oder Pfähle in ihrem oberen Teil eine von der Kraftrichtung unabhängige Stabilität gegen Seitendruck erhalten. Die dadurch gleichmäßige Lastverteilung sorgt zusätzlich für eine lange Lebensdauer.

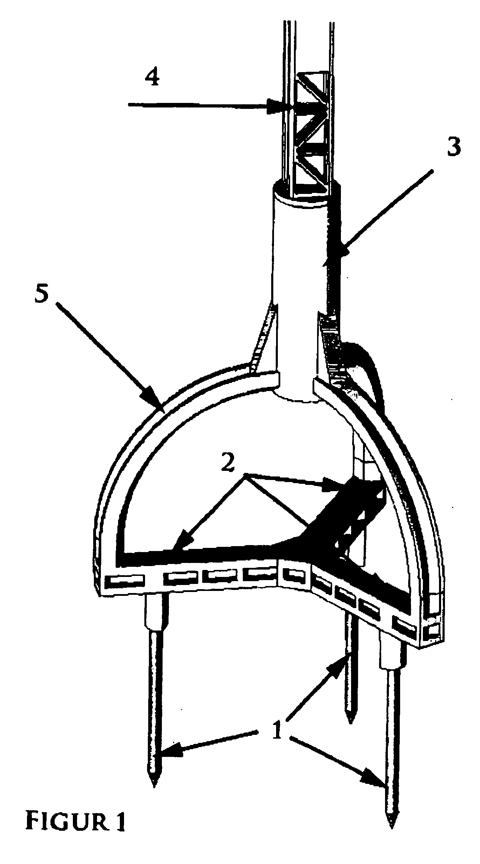

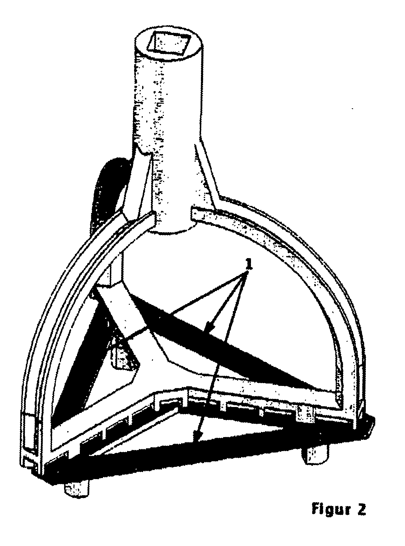

Die Ausbildung einer Trittplattform in einem der in den beigefügten Zeichnungen veranschaulichten Beispiele bringt weitere erfindungsgemäße Vorteile. Diese Varianten (Figur 1, Ziffer 2: bogenförmig mit sternförmiger Verbindung der Erdspieße untereinander), Figur 2, Ziffer 1: zusätzliche dreieckförmige Verbindungen zwischen den Erdspießen) bewirken alle einen entscheidenden erfindungsgemäßen Vorteil. Die mit einer dieser Varianten entstehende Trittfläche stellt für einen menschlichen Fuß eine ausreichend große Plattform dar, so daß beim Eintreten in den Boden das gesamte Körpergewicht vollflächig und zentral einwirken kann. Dadurch wird das leichte Eindringen der Erdspieße auch in feste Boden sicher ermöglicht. Eine derartige Ausgestaltung ergibt außerdem einen mehrseitigen Zugang zur Trittfläche, so daß eine später angebrachte Haltekonstruktion, Stange oder Pfahlkörper jederzeit sehr leicht vertikal ausgerichtet werden kann.

Die raumgebende bogenförmige oder gerade Verbindung zwischen der Ebene der Erdspieß-Befestigungen und der zentralen Aufnahme des Pfahlkörpers erzeugt einen weiteren mechanischen Vorteil: Die auf dem erfindungsgemäßen Fuß befestigten Pfosten erzeugen eine Biegekraft, z. B. durch Wind oder durch die an ihnen befestigte Materialien. Diese Kraft wird auf den Fuß, insbesondere auf die Verbindungen zwischen Pfahlaufnahme und Erdspießen übertragen. Durch ihre Bogenform ist die Verbindungskonstruktion erfingdungsgemäß jedoch sehr stabil und torsionsfest, so daß sie selbst nach leichter Verwindung wieder in die ursprüngliche Form zurückkehrt. Damit wird eine besondere Bruchsicherheit in dieser Zone sichergestellt.

Zur Verwendung als Weidezaunpfahl ergibt sich ein weiterer entscheidender Vorteil durch eine erfindungsgemäße Variante, bei der Stützfuß und Pfahlkörper trennbar sind und damit die Austauschbarkeit des oberen Pfahlkörpers erreicht wird. Dadurch ist es möglich, verschiedene Oberteile mit unterschiedlichen Längen, Aufhängevorrichtungen und Farbgebungen einzusetzen und dabei den Fuß wieder zu verwenden: So ist mit dieser Variante zum einen gewährleistet, daß der gesamte Zaun sehr leicht den aktuellen Bedürfnissen angepaßt werden kann. Zum anderen ist auch im Falle einer Überbeanspruchung des oberen Pfahlkörpers eine kostengtünstige Reparatur möglich, da ein intakter Fuß wieder verwendbar ist.

## Patentansprüche

1. Pfahl zur Herstellung von Einfriedungen mittels Bändern, Litzen, Seilen, Drähten und dergleichen, insbesondere Weidezaunpfahl, im wesentlichen bestehend aus einem Stützfuß mit Erdspießen (1) und einem Pfahlkörper (4), **dadurch gekennzeichnet, dass** der Stützfuß mit drei oder mehr Erdspießen (1) ausgestattet ist, die Verbindung (2) zwischen den Erdspießen (1) eine darüberliegende Trittfläche mit Mehrpunktabstützung bilden, und diese Trittfläche mit dem Pfahlkörper (4) durch mehrere bogenförmige oder gerade Verstrebungen (5) verbunden ist.

2. Pfahl nach Anspruch 1, **dadurch gekennzeichnet, dass** die als Plattform einen mehrseitigen Zugang für einen menschlichen Fuß aufweisende Verbindung (2) und die mehreren bogenförmigen Verstrebungen (5) als eine stabile, torsionsfeste sowie bruchsichere Verbindungskonstruktion zusammenwirken.

3. Pfahl nach Anspruch 1 oder 2, **dadurch gekennzeichnet, dass** die Verbindungen (2) zwischen den Erdspießen (1) aus kreisförmig, sternförmig oder dreieckförmig angeordneten Verstrebungen oder daraus gebildeten rechteckigen oder nichtrechteckigen Flächen bestehen.

4. Pfahl nach einem der Ansprüche 1 bis 3, **dadurch gekennzeichnet, dass** er zweistückig ausgebildet ist, so dass der obere Teil des Stützfußes mit einer Aufnahme (3) für einen Pfahlkörper (4) mit rundem oder nichtrundem Querschnitt ausgebildet ist und der zugehörige obere Pfahlkörper (4) mit einem geeigneten Endstück zur Einfügung in die Aufnahme (3) des Stützfußes versehen ist.

## Claims

1. Post for setting up enclosures by means of electrically conductive materials such as tapes, braids, cords, metal wires or the like, in particular used as a meadow fence post, consisting of a support foot with earth spikes (1), and an upper post construction (4), **characterised in that** its support foot is equipped with 3 or more spikes (1), the connections (2) between the spikes (1) result in an upper footboard with multi-point support, and this tread is connected with the upper post construction (4) by several arc-shaped or straight connections (5).

2. Post according to claim 1, **characterised in that** the tread which is formed from the connecting pieces (2), offering a multi-sided approach, cooperates with multiple struts (5) for a stable, torsion-free and shock-resistant construction.

3. Post according to claims 1 and 2, **characterised in that** the connecting parts (2) between the spikes (1) consist of circular, star-shaped, or triangle-shaped struttings, or consequential rectangular or non-rectangular areas.

4. Post according to claims 1 to 3, **characterised in that** it is designed to be a two-piece construction, so that the upper part from the support foot is equipped with a slot or attachment (3) for an upper post construction (4) that has a round or non-round section shape, and the corresponding upper post construction (4) being equipped with a suitable end part for fitting into the slot (3) from the support foot.

## Revendications

1. Poteau pour établir des barrières au moyen de rubans, celles, cordes, fils métallique et d'autres choses semblables, notamment pour poteau de barrières de prairies, essentiellement composé d'une partie inférieure formée comme un pied d'arrêt avec des pointes (1) et une partie de poteau supérieure (4), **caractérisé en ce que** ledit pied d'arrêt est équipé de 3 ou plus de 3 pointes (1), la connexion (2) entre les pointes (1) forme un coup de pied élevé avec un renfort à multipoint, et que ce coup de pied est connecté avec le poteau supérieur (4) au moyen de plusieurs contrefiches (5) arquées ou droites.

2. Poteau selon la revendication 1, **caractérisé en ce que** la connexion (2) comme plateforme avec un accès au coup de pied pour un pied humain et les plusieurs contrefiches arquées (5) contribuent à une construction de raccordement stable, constante contre torsion et résistance.

3. Poteau selon les revendications 1 ou 2, **caractérisé en ce que** les connexions (2) entre les pointes (1) consistent en contrefiches groupées en cercle, en étolle ou en triangle ou bien consistent en plateaux rectangulaires ou non-rectangulaires formées au moyen des dites contrefiches.

4. Poteau selon les revendications 1 à 3, **caractérisé en ce que** le poteau est composé de deux étages, de façon que la partie supérieure du pied d'arrêt soit équipée avec un logement (3) pour un poteau supérieur (4) avec une section transversale circulaire ou non-circulaire, et que le poteau supérieure correspondant (4) soit est équipé au bout avec une pièce compatible avec e logement (3) du pied d'arrêt.
